# EUROPEAN PATENT APPLICATION

(11) **EP 4 543 065 A1**
(43) Date of publication of application: **23.04.2025**
(21) Application number: 23827315.5
(22) Date of filing: 07.02.2023
(51) Int. Cl.: H04W 12/06, H04W 12/0431, H04W 12/40, H04W 8/02, H04W 84/04

(54) **METHOD AND APPARATUS FOR AUTHENTICATION OF USER EQUIPMENT IN WIRELESS COMMUNICATION SYSTEM**

(30) Priority: 20.06.2022 US 202263353644 P
(71) Applicant: LG Electronics Inc., Yeongdeungpo-gu Seoul 07336 (KR)
(72) Inventor: KIM, Anbin, Seoul 06772 (KR)
(74) Representative: Plasseraud IP
(86) International application number: PCT/KR2023/001694
(87) International publication number: WO 2023/249192

(57) **Abstract**

The present disclosure relates to a method for operating an AUSF in a wireless communication system, and the method may include receiving a message related to primary authentication of a terminal, wherein the message related to the primary authentication includes an SUCI or 5G-GUTI and a serving network name (SN-name) of the terminal, generating an AKMA anchor key and an A-KID indicating the AKMA anchor key based on a network root key, performing a procedure of registering the AKMA anchor key in a first AAnF based on an SUPI, the AKMA anchor key and the A-KID, determining whether the terminal is a roaming terminal, and based on the terminal being the roaming terminal, performing a procedure of registering the AKMA anchor key in a second AnnF.

## Description

### Technical Field

The present disclosure relates to a wireless communication system, and more particularly, to a method for performing authentication of a terminal. Specifically, the present disclosure relates to a method for performing an AKMA (authentication and key management for applications) key registration procedure for supporting an AKMA service, when a terminal is in a roaming situation.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide a method and apparatus for performing authentication of a terminal in a wireless communication system.

The present disclosure may provide a method and apparatus for performing an AKMA key registration procedure in a visited PLMN (VPLMN) when a terminal is in a roaming situation.

The present disclosure may provide a method and apparatus for determining by an authentication server function (AUSF) whether a terminal is roaming in a wireless communication system.

The present disclosure may provide a method and apparatus for registering an AKMA key in an AKMA anchor function (AAnF) of an HPLMN and an AAnF of a VPLMN after primary authentication of a terminal in a wireless communication system.

The present disclosure may provide a method and apparatus for registering an AKMA key in an AAnF of a VPLMN directly by an AUSF of an HPLMN in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for operating an authentication server function (AUSF) in a wireless communication system may include receiving a message related to a primary authentication of a terminal, wherein the message related to the primary authentication includes a serving network name (SN-name) of the terminal together with a subscription concealed identifier (SUCI) or a 5G-globally unique temporary identifier (GUTI), generating an authentication and key management for applications (AKMA) anchor key and an A-KID indicating the AKMA anchor key based on a network root key, performing a procedure of registering the AKMA anchor key in a first AKMA anchor function (AAnF) based on an SUPI, the AKMA anchor key and the A-KID, determining whether the terminal is a roaming terminal, and based on the terminal being the roaming terminal, performing a procedure of registering the AKMA anchor key in a second AAnF.

In addition, as an example of the present disclosure, an authentication server function (AUSF) operating in a wireless communication system may include at least one transceiver, at least one processor, and at least one memory operably coupled to the at least one processor and storing instructions that instruct, when executed, the at least one processor to perform a specific operation, and the specific operation may be configured to control the at least one transceiver to receive a message related to a primary authentication of a terminal, wherein the message related to the primary authentication includes a serving network name (SN-name) of the terminal together with a subscription concealed identifier (SUCI) or a 5G-globally unique temporary identifier (GUTI), to generate an authentication and key management for applications (AKMA) anchor key and an A-KID indicating the AKMA anchor key based on a network root key, to perform a procedure of registering the AKMA anchor key in a first AKMA anchor function (AAnF) based on an SUPI, the AKMA anchor key and the A-KID, to determine whether the terminal is a roaming terminal, and based on the terminal being the roaming terminal, to perform a procedure of registering the AKMA anchor key in a second AAnF.

In addition, as an example of the present disclosure, a method for operating a terminal in a wireless communication system may include transmitting, by the terminal, a message based on primary authentication, wherein the message includes any one of a subscription concealed identifier (SUCI) or a 5G-globally unique temporary identifier (GUTI), based on the terminal supporting authentication and key management for applications (AKMA), generating an AKMA anchor key and an A-KID indicating the AKMA anchor key based on a network root key, and completing authentication for a network, and based on the terminal being a roaming terminal, an AUSF may perform a procedure of registering the AKMA anchor key in a first AKMA anchor function (AAnF) and a second AAnF respectively based on the AKMA anchor key and the A-KID.

In addition, as an example of the present disclosure, a terminal operating in a wireless communication system may include at least one transceiver, at least one processor, and at least one memory operably coupled to the at least one processor and storing instructions that instruct, when executed, the at least one processor to perform a specific operation, and the specific operation may be configured to control the terminal to transmit a message based on primary authentication, wherein the message includes any one of a subscription concealed identifier (SUCI) or a 5G-globally unique temporary identifier (GUTI), based on the terminal supporting authentication and key management for applications (AKMA), to generate an AKMA anchor key and an A-KID indicating the AKMA anchor key based on a network root key, and to complete authentication for a network, and based on the terminal being a roaming terminal, an AUSF may perform a procedure of registering the AKMA anchor key in a first AKMA anchor function (AAnF) and a second AAnF respectively based on the AKMA anchor key and the A-KID.

In addition, as an example of the present disclosure, a device comprising at least one memory and at least one processor functionally coupled with the at least one memory, and the at least one processor may control the device to receive a message related to a primary authentication of a terminal, wherein the message related to the primary authentication includes a serving network name (SN-name) of the terminal together with a subscription concealed identifier (SUCI) or a 5G-globally unique temporary identifier (GUTI), to generate an authentication and key management for applications (AKMA) anchor key and an A-KID indicating the AKMA anchor key based on a network root key, to perform a procedure of registering the AKMA anchor key in a first AKMA anchor function (AAnF) based on an SUPI, the AKMA anchor key and the A-KID, to determine whether the terminal is a roaming terminal, and based on the terminal being the roaming terminal, to perform a procedure of registering the AKMA anchor key in a second AAnF.

In addition, as an example of the present disclosure, a non-transitory computer-readable medium storing at least one instruction may include the at least one instruction that is executable by a processor, and the at least one instruction may control a device to receive a message related to a primary authentication of a terminal, wherein the message related to the primary authentication includes a serving network name (SN-name) of the terminal together with a subscription concealed identifier (SUCI) or a 5G-globally unique temporary identifier (GUTI), to generate an authentication and key management for applications (AKMA) anchor key and an A-KID indicating the AKMA anchor key based on a network root key, to perform a procedure of registering the AKMA anchor key in a first AKMA anchor function (AAnF) based on an SUPI, the AKMA anchor key and the A-KID, to determine whether the terminal is a roaming terminal, and based on the terminal being the roaming terminal, to perform a procedure of registering the AKMA anchor key in a second AAnF.

In addition, the following examples may commonly apply.

As an example of the present disclosure, based on a terminal being a roaming terminal, an AUSF may be an AUSF of a home public land mobile network (HPLMN) of the terminal, a first AAnF may be an AAnF of the HPLMN, and a second AAnF may be an AAnF of a visited PLMN (VPLMN).

In addition, as an example of the present disclosure, irrespective of whether a terminal is a roaming terminal, an AUSF may perform a procedure of registering an AKMA anchor key in an AAnF of an HPLMN based on the AKMA anchor key and an A-KID.

In addition, as an example of the present disclosure, based on an AUSF performing a procedure of registering an AKMA anchor key in an AAnF of an HPLMN, the AUSF may transmit an AKMA anchor key registration request including a subscriber permanent identifier (SUPI), the AKMA anchor key and an A-KID to the AAnF of the HPLMN, completes the registration of the AKMA anchor key in the AAnF of the HPLMN by receiving an AKMA anchor key registration response from the AAnF of the HPLMN.

In addition, as an example of the present disclosure, an AUSF may determine, based on a serving network name, whether a terminal is a roaming terminal, and based on the terminal being a roaming terminal, the AUSF may transmit an AKMA anchor key registration request including an SUPI, an AKMA anchor key and an A-KID to an AAnF of a VPLMN, completes registration of the AKMA anchor key in the AAnF of the VPLMN by receiving an AKMA anchor key registration response from the AAnF of the VPLMN.

In addition, as an example of the present disclosure, based on a roaming terminal transmitting an application session generation request to an application function (AF) of a VPLMN, an application key may be provided to the terminal based on an AAnF of the VPLMN, and based on the roaming terminal transmitting an application session generation request to an AF of a HPLMN, an application key may be provided to the terminal based on an AAnF of the HPLMN.

In addition, as an example of the present disclosure, an application session request transmitted by a terminal may include an A-KID, and an AF may determine, based on the A-KID, whether the terminal is a roaming terminal.

In addition, as an example of the present disclosure, based on a terminal being determined as a roaming terminal, an AF may request an application key to an AAnF of a VPLMN, obtain an application key derived from an AKMA anchor key and application key expiration time information, and thus establish an application session with the terminal.

In addition, as an example of the present disclosure, based on a terminal being determined as not roaming terminal, an AF may request an application key to an AAnF of an HPLMN, obtain an application key derived from an AKMA anchor key and application key expiration time information, and thus establish an application session with the terminal.

In addition, as an example of the present disclosure, an AUSF may transmit a request message for primary authentication of a terminal to a unified data management (UDM) based on a message related to the primary authentication of the terminal and receive a response message for the primary authentication of the terminal from the UDM, wherein the response message for the primary authentication of the terminal may include an indicator indicating whether an AKMA is supported, and based on the AKMA being supported based on the indicator, an AKMA anchor key and an A-KID are generated based on a network root key, and the terminal may generate the AKMA anchor key and the A-KID based on the network rook key.

In addition, as an example of the present disclosure, a message related to primary authentication of a terminal may be an N1 message.

### Advantageous Effects

The present disclosure may provide a method for performing authentication of a terminal in a wireless communication system.

The present disclosure may provide a method for performing a procedure of registering an AKMA key in a VPLMN, when a terminal is in a roaming situation in a wireless communication system.

The present disclosure may provide a method for determining by an AUSF whether a terminal is roaming in a wireless communication system.

The present disclosure may provide a method for registering an AKMA key in an AAnF of an HPLMN and an AAnF of a VPLMN after primary authentication of a terminal in a wireless communication system.

The present disclosure may provide a method for registering an AKMA key in an AAnF of a VPLMN directly by an AUSF of an HPLMN in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a view showing a method for starting an authentication procedure that is applicable to the present disclosure.
FIG. 6 is a view showing a method for performing authentication based on an EAP AKA' method that is applicable to the present disclosure.
FIG. 7 is a view showing a method for performing authentication based on a 5G AKA' method that is applicable to the present disclosure.
FIG. 8 is a view showing a hierarchical structure of keys applicable to the present disclosure.
FIG. 9 is a view showing an AKMA key hierarchical structure applicable to the present disclosure.
FIG. 10 is a view showing a method for notifying arrival of an expiration time of an application key according to an embodiment of the present disclosure.
FIG. 11 is a view showing an AAnF selection and search procedure that is applicable to the present disclosure.
FIG. 12 is a view showing a method for initiating AKMA that is applicable to the present disclosure.
FIG. 13 is a view showing a method for removing an AKMA context that is applicable to the present disclosure.
FIG. 14 is a view showing a method for registering an AKMA key in an AAnF of a VPLMN that is applicable to the present disclosure.
FIG. 15 is a view showing a method for registering an AKMA key that is applicable to the present disclosure.
FIG. 16 is a flowchart of a method for operating an AUSF that is applicable to the present disclosure.
FIG. 17 is a flowchart of a method for operating a terminal that is applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (1) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

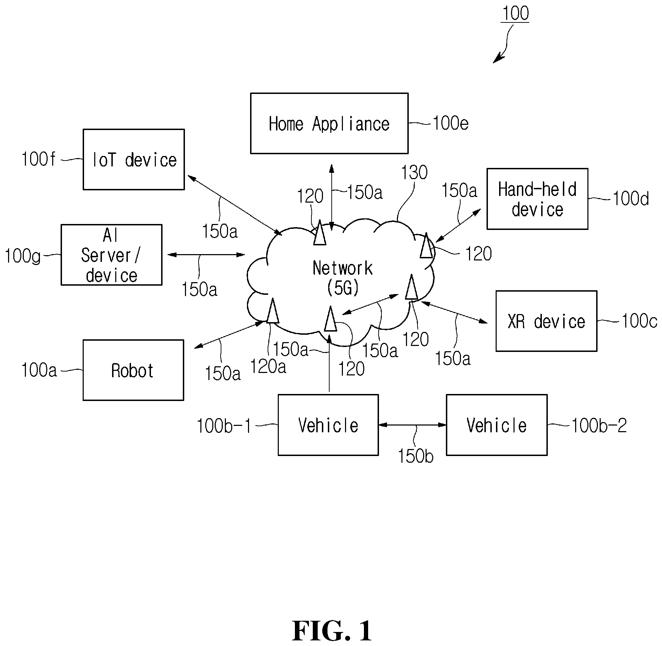

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

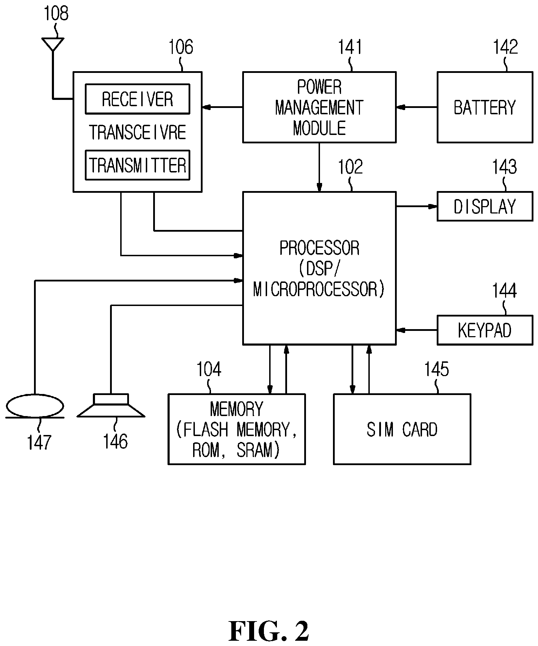

FIG. 2 is a view showing an example of a UE to which the implementation of the present disclosure is applied.

Referring to FIG. 2, a UE 100 may include a processor 102, a memory 104, a transceiver 106, one or more antennas 108, a power management module 141, a battery 142, a display 143, a keypad 144, a subscriber identification module (SIM) card 145, a speaker 146, and a microphone 147.

The processor 102 may be configured to implement a description, a function, a procedure, a proposal, a method and/or an operating flowchart disclosed in the present specification. The processor 102 may be configured to control one or more different components of the UE 100 to implement a description, a function, a procedure, a proposal, a method and/or an operating flowchart disclosed in the present specification. A layer of a wireless interface protocol may be embodied in the processor 102. The processor 102 may include an ASIC, other chipsets, a logic circuit and/or a data processing device. The processor 102 may be an application processor. The processor 102 may include at least one of a DSP, a central processing unit (CPU), a graphics processing unit (GPU), and a modem (modulator and demodulator).

The memory 104 may be coupled operably with the processor 102 and store various information for operating the processor 102. The memory 104 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 104 and be executed by the processor 102. The memory 104 may be embodied in the processor 102 or outside the processor 102 in which case the memory 104 may be communicatively coupled with the processor 102 through various methods known in technology.

The transceiver 106 may be operably coupled with the processor 102 and transmit and/or receive a radio signal. The transceiver 106 may include a transmitter and a receiver. The transceiver 106 may include a baseband circuit for processing a radio frequency signal. The transceiver 106 may transmit and/or receive a radio signal by controlling the one or more antennas 108.

The power management module 141 may manage the power of the processor 102 and/or the transceiver 106. The battery 142 may supply power to the power management module 141.

The display 143 may output a result processed by the processor 102. The keypad 144 may receive an input to be used in the processor 102. The keypad 144 may be displayed on the display 143.

The SIM card 145 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 146 may output a sounded-related result processed in the processor 102. The microphone 147 may receive a sounded-related input to be used in the processor 102.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 400of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

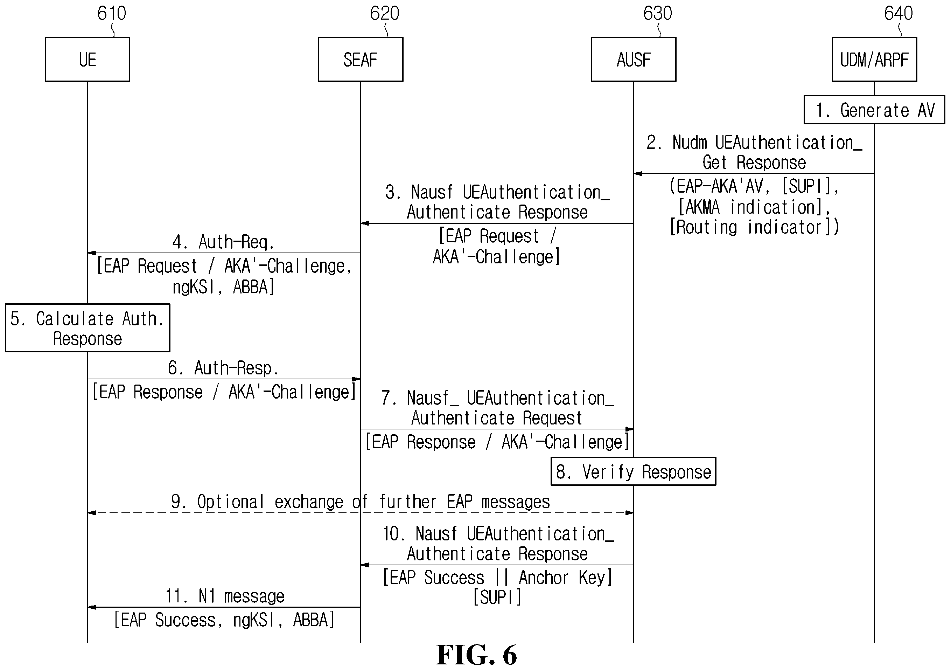

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

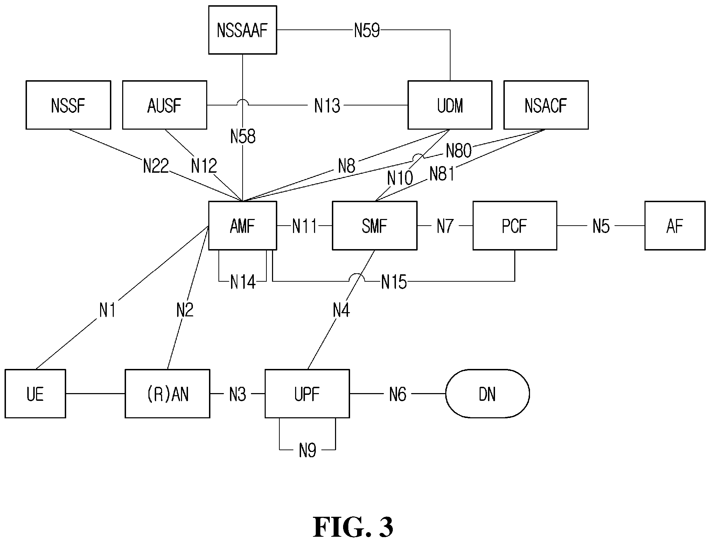

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

Hereinafter, the present disclosure describes each layer of a wireless protocol.

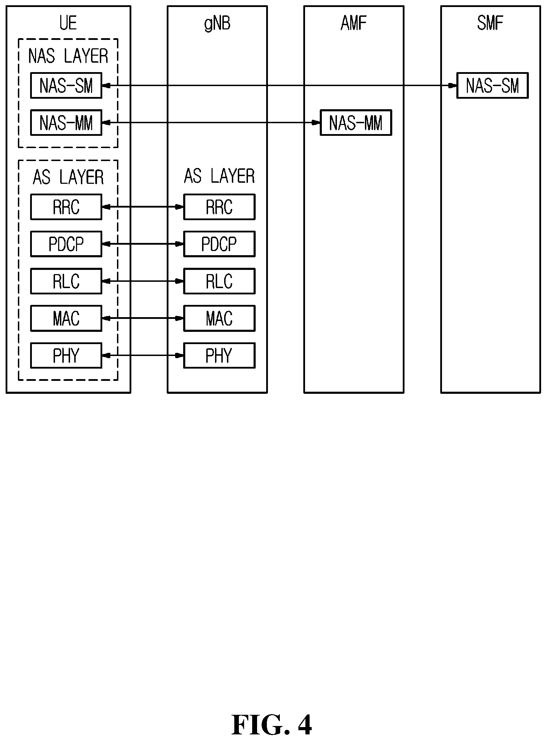

FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

In case a terminal is connected to a core network, the terminal may perform a security procedure. As an example, the terminal may select a core network (e.g., 5GC, EPC) and be connected to the core network, and a different security procedure may be performed based on a selected core network. In a security procedure, a terminal and a network may perform primary authentication and a key agreement procedure for mutual authentication. When the terminal and the network complete the primary authentication, K_{AUSF} may be generated and stored in an authentication server function (AUSF). Herein, K_{SEAF} for a serving network may be derived by K_{AUSF}, and one or more security context keys may be derived from K_{SEAF} in the serving network without a new authentication procedure.

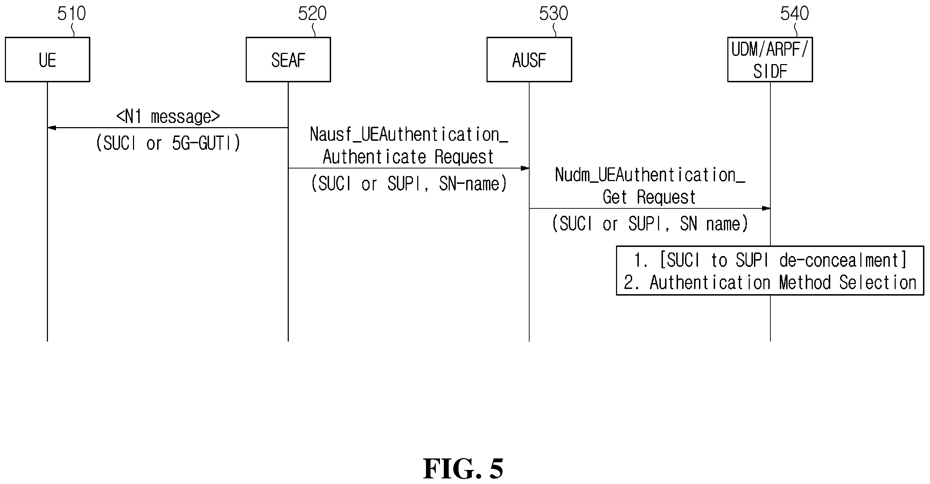

FIG. 5 is a view showing a method for starting an authentication procedure that is applicable to the present disclosure. Referring to FIG. 5, a security anchor function (SEAF) 1020 may perform an authentication procedure with a terminal 510. As an example, the SEAF may be a partial function of an AMF but is not limited to a specific embodiment.

The terminal 510 and the SEAF 520 may perform an authentication procedure in a procedure of establishing a signaling connection based on an SEAF policy. Herein, the terminal 510 may forward an N1 message including a subscription concealed identifier (SUCI) or 5G-globally unique temporary identifier (GUTI) to the SEAF 520. The SEAF 520 may forward an authentication request message (e.g., Nausf_UEAuthentication_Authenticate Request) including the SUCI or a subscriber permanent identifier (SUPI) and a serving network name (SN-name) to an AUSF 530. Thus, the AUSF 530 may determine whether the terminal is a roaming terminal, which will be described below.

As an example, in case there is a valid 5G-GUTI and a terminal is reauthenticated, the SEAF 520 may transmit an authentication request message including a SUPI. After receiving the authentication request message, the AUSF 530 may check whether the SEAF 520 in a serving network is qualified to use a serving network name. Herein, if the SEAF 520 is not qualified, the AUSF 530 may forward a response for indicating no qualification to the SEAF 520. On the other hand, if the SEAF 520 is qualified, the AUSF 530 may transmit a request message (e.g., Nudm_UEAuthentication_Get Request) to a user data management (UDM)/ authentication credential repository and processing function (ARPF) 540. Herein, the request message may include an SUCI or an SUPI together with information on the serving network name. As an example, if the UDM/ARPF 540 receives the SUCI, the UDM/ARPF 540 may obtain the SUPI from the SUCI. Then, the UDM/ARPF 540 may select an authentication method.

In case a terminal performs a mutual authentication procedure to access a network, in a new communication system (e.g., 5G system), mutual authentication between the terminal and the network may be performed using a 5G authentication key agreement (AKA) method or an EAP AKA' method.

As an example, FIG. 6 is a view showing a method for performing authentication based on an EAP AKA' method that is applicable to the present disclosure. Referring to FIG. 6, user data management (UDM)/ authentication credential repository and processing function (ARPF) 640 may generate an authentication vector (AV). Next, the UDM/ARPF 640 may calculate a CK' and an IK' based on a cipher key (CK) and an integrity key (IK) and forward an AV' including a RAND, an AUTN, an XRES, the CK' and the IK' to an authentication server function (AUSF) 630. As an example, as a response to an authentication request of an AUSF 630, the UDM/ARPF 640 may forward the AV' to the AUSF 630. In addition, based on an authentication request of a terminal, the AUSF 630 may perform an authentication request to the UDM/ARPF 640 but is not limited to the above-described embodiment. In addition, as an example, the above-described authentication response may further include at least one or more of an SUPI, an AKMA indicator, and a routing indicator based on the authentication request of the AUSF 630 but is not limited to the above-described embodiment.

Next, based on the AV', the AUSF 630 may transmit an EAP request and an AKA'-Challenge to a security anchor function (SEAF) 620. As an example, the AKA'-Challenge may be a value that is generated based on a root key of a user ID. Herein, the AUTN may be generated and verifies based on the AKA'-Challenge. Next, the SEAF 620 may transmit an authentication request message including the EAP request and the AKA'-Challenge to a terminal 610 through an NAS message. As an example, the authentication request message may further include an ngKSI and an ABBA parameter. Herein, the ngKSI may be a value for identifying a security context that is generated when an AMF succeeds in authentication. When the terminal 610 receives the authentication request message, the terminal 610 may generate an AUTN by using a same algorithm as a network through a key held by the terminal 610 and perform authentication based on whether the generated AUTN is identical to a received AUTN. Next, based on a value generated through the key held in it, the terminal 610 may transmit an authentication response including an EAP response and the AKA'-Challenge to the SEAF 620. The SEAF 620 may also transmit the authentication response including the EAP response and the AKA'-Challenge to the AUSF 630, and the AUSF 630 may perform authentication through verification of the value generated by the terminal. Thus, mutual authentication may be performed. Next, further authentication between the AUSF 630 and the terminal 610 may be performed, but the present disclosure may not be limited thereto.

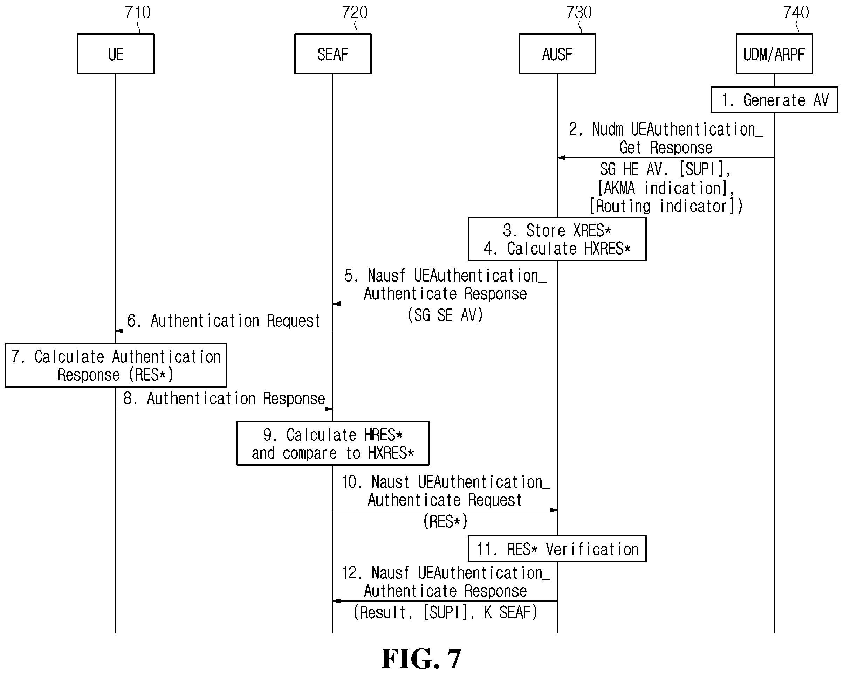

In addition, as an example, FIG. 7 is a view showing a method for performing authentication based on a 5G AKA' method that is applicable to the present disclosure.

Referring to FIG. 7, a UDM/ARPF 740 may generate an authentication vector (AV). As an example, the AV may be a 5G HE AV, and the 5G HE AV may be generated through a RAND, an AUTN, an XRES* and a K_AUSF. Next, the UDM/ARPF 740 may forward the 5G HE AV to an AUSF 730. As an example, as an authentication response to an authentication request of the AUSF 730, the UDM/ARPF 740 may forward the 5G HE AV to the AUSF 730. The AUSF 730 may perform an authentication request to the UDM/ARPF 740 based on an authentication request of a terminal but is not limited to the above-described embodiment. In addition, the above-described authentication response may further include at least one or more of an SUPI, an AKMA indicator, and a routing indicator, based on the authentication request of the AUSF 730, but is not limited to the above-described embodiment.

Next, the AUSF 730 may generate a 5G AV based on the 5G HE AV. Herein, the AUSF 730 may calculate an HXRES* through the XRES* and a K_SEAF through the K_AUSF. The AUSF 730 may generate a 5G AV by replacing the XRES* by the HXRES* and replacing the K_AUSF by the K_SEAF in the 5G HE AV. Next, the AUSF 730 may generate and forward a 5G SE AV including a RAND, an AUTH and the HXRES* to the SEAF 720, and the SEAF 720 may transmit an authentication request message including a RAND and an AUTH to a terminal 710 through an NAS message. As an example, the authentication request message may further include an ngKSI and an ABBA parameter. Herein, the ngKSI may be a value for identifying a security context that is generated when the terminal 710 and an AMF succeed in authentication. When the terminal 710 receives the authentication request message, the terminal 710 may generate an AUTN by using a same algorithm as a network through a key held by the terminal 610 and perform authentication based on whether the generated AUTN is identical to the received AUTN.

Next, the terminal 710 may generate a RES* value through a key held by it and transmit an authentication response including RES* to the SEAF 720. The SEAF 720 may calculate HRES* based on RES* and compare HRES* with the above-described HXRES*. If the two values are identical, the SEAF 720 may determine success of authentication and transmit an authentication response including RES* to the AUSF 730. When receiving the authentication response including RES*, the AUSF 730 may perceive that mutual authentication is performed.

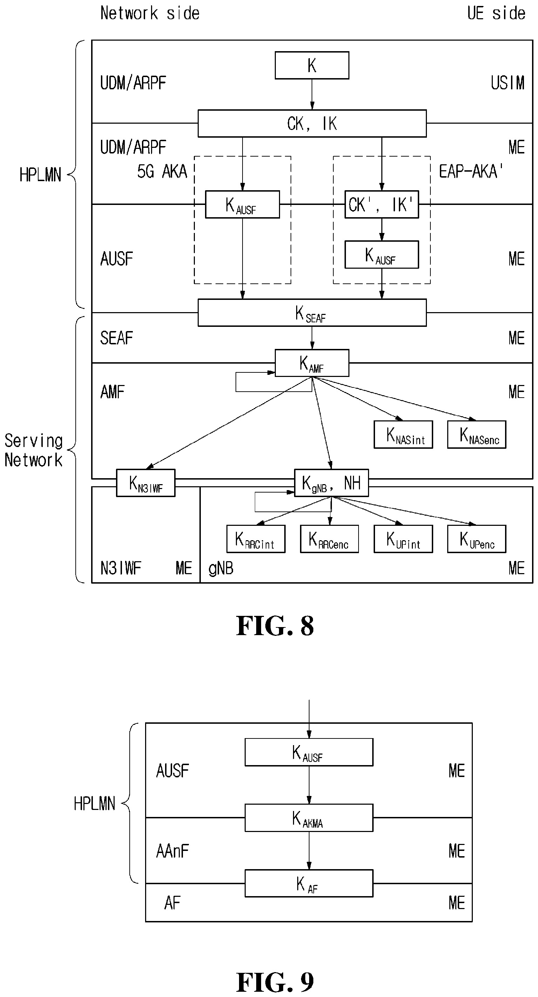

FIG. 8 is a view showing a hierarchical structure of keys applicable to the present disclosure. Referring to FIG. 8, in a UDM/ARPF, a cipher key (CK) and an integrity key (IK) may be generated based on a key (K). Herein, if authentication is performed based on the EAP AKA' method of FIG. 6, a CK' and an IK' may be calculated from the CK and the IK, and an AV' including a RAND, an AUTN, an XRES, the CK' and the IK' may be forwarded to an AUSF to generate K_{AUSF}. On the other hand, if authentication is performed based on the 5G AKA method of FIG. 7, K_{AUSF} may be generated from a CK and an IK. Herein, an SEAF may generate K_{SEAF} through K_{AUSF}, and K_{AMF} may be generated by K_{SEAF}. In addition, at least any of the various keys of FIG. 8 may be generated based on K_{AMF}, and this may be as described in FIG. 8.

FIG. 9 is a view showing an AKMA key hierarchical structure applicable to the present disclosure. As an example, an authentication and key management for applications (AKMA) may be a system capable of generating an application key that is necessary when an application and a terminal perform encrypted communication. Herein, the application key may be generated based on mutual authentication between the terminal and a mobile communication network and a network root key K_{AUSF} generated after the authentication. As a specific example, after primary authentication of the terminal is successful based on an AKMA system, K_{AUSF} may be generated. Referring to FIG. 9, in each of a network (AUSF) and a terminal, K_{AKMA} may be generated as a root key that may be used to generate an application key later, and an A-KID capable of indicating K_{AKMA} may also be generated together.

Next, K_{AKMA} generated in the AUSF may be forwarded to an AKMA anchor function (AAnF). As an example, the AUSF may include an SUPI, the A-KID and K_{AKMA} in an AKMA anchor key registration request, forward the AKMA anchor key registration request to the AAnF, and receive an AKMA anchor key registration response from the AAnF.

In addition, the terminal may generate K_{AF} from K_{AKMA} in advance. The terminal may include the A-KID in an application function (AF) and request generation of an application session. As an example, the terminal and the AF may be connected based on a Ua interface. The AF may verify the A-KID include a request for generation of the application session and identify a corresponding security context. As an example, if there is no corresponding security context, the AF may request the AAnF to generate a new K_{AF}. Next, the AAnF may generate K_{AKMA} based on the new K_{AF} and set and send an expiration time of the K_{AF} in a response to the AF.

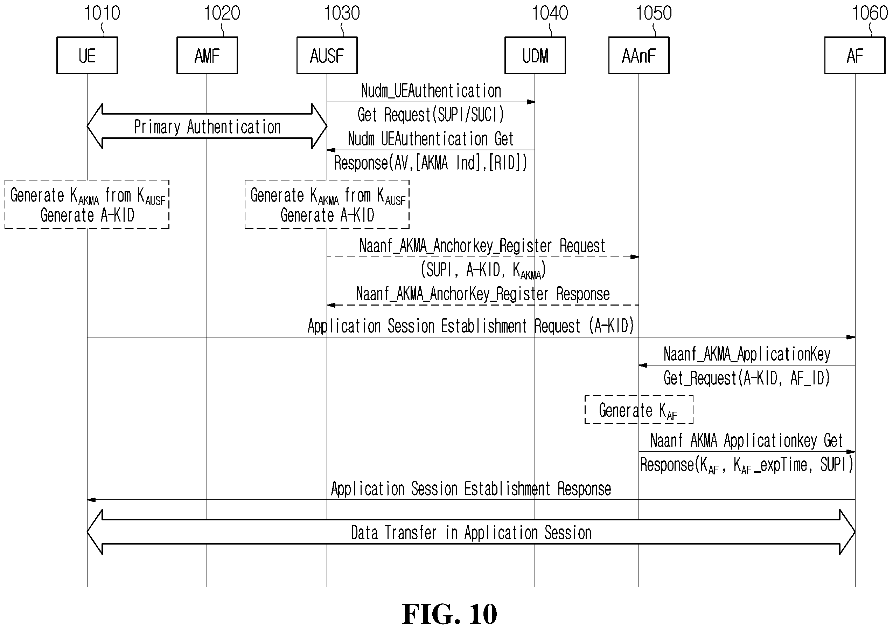

FIG. 10 is a view showing a method for establishing an application session according to an embodiment of the present disclosure. Referring to FIG. 10, when primary authentication for a terminal 1010 is performed, an AUSF 1030 may request information and a method necessary for the authentication to a unified data management (UDM) 1040. Herein, based on a response received from the UDM 1040, the AUSF 1030 may check whether an AKMA anchor key is to be generated. That is, the UDM 1040 may provide information regarding whether the AKMA anchor key is to be generated, when responding to the AUSF 1030. As an example, the information regarding whether the AKMA anchor key is to be generated may be indicated based on an "AKMA Ind" value. That is, if the "AKMA Ind" value is included in a response of the UDM 1040, the AUSF 1030 may generate the AKMA anchor key. When the "AKMA Ind" value is included in the response of the UDM 1040, a RID for the terminal may also be included in the response and be forwarded to the AUSF 1030 together with the "AKMA Ind" value.

Next, in case the primary authentication is successfully completed and the AUSF 1030 receives the "AKMA Ind" value from the UDM 1040, the AUSF 1030 may store K_{AUSF} and generate an AKMA anchor key (K_{AKMA}) and an A-KID from the K_{AUSF}. After the AKMA anchor key is generated, the AUSF 1030 may select an AAnF 1050 through a function of "AAnF search and selection". In addition, the AUSF 1030 may forward the generated A-KID and K_{AKMA} to the AAnF 1050 together with an SUPI of the terminal. Next, the AAnF 1050 may transmit a response to the AUSF 1030 to indicate completion of the procedure. The terminal 1010 may generate K_{AKMA} and an A-KID before initiating an AKMA application and forward the generated A-KID when requesting an application service to an AF 1060. Herein, as an example, the terminal 1010 may generate K_{AF} before or after transmitting a request message. In case the AF 1060 does not have a context related to the received A-KID, the AF 1060 may transmit the A-KID to the AAnF 1050 to request K_{AF}. Herein, the AF 1060 may transmit a request including an AF_ID. Next, the AAnF 1050 may perform a procedure for providing a service to the AF. In addition, as an example, the AAnF 1050 may stop the procedure and is not limited to a specific embodiment.

As an example, based on the presence of K_{AKMA} related to the A-KID, the AAnF 1050 may verify whether AKMA is available. In case the AAnF 1050 has a corresponding K_{AKMA}, the AAnF 1050 may perform a procedure for providing a service to the AF 1060. Herein, in case the AAnF 1050 does not have K_{AF}, the AAnF 1050 may generate K_{AF}. Next, the AAnF 1050 may forward the SUPI, the generated K_{AF} and a K_{AF} expiration time to the AF 1060. Herein, the AF 1060 may notify completion of generation of an application session, and data transmission may be performed based on the application session.

On the other hand, in case the AAnF 1050 has no corresponding K_{AKMA}, the AAnF 1050 may transmit an error response to the AF 1060. Herein, the AF 1060 may also notify a cause of failure to the terminal, and the terminal may request a new application session to the AF 1060 with a latest A-KID for an AKMA.

After the AF 1060 forwards a response about completion of generation of an application session to the terminal 1010, the expiration time of K_{AF} may arrive. Herein, when K_{AF} expires, whether data received from the terminal 1010 is received through the application session, a different operation may be performed.

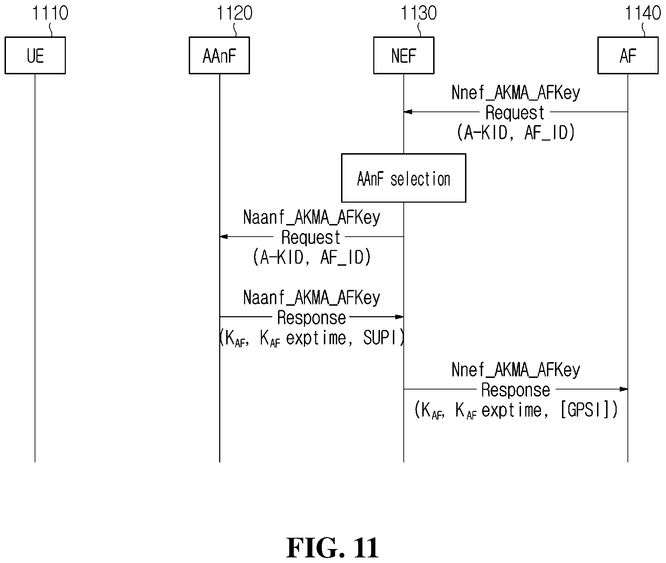

FIG. 11 is a view showing an AAnF selection and search procedure that is applicable to the present disclosure.

Referring to FIG. 11, in case an AF 1140 receives an AKMA key request for a terminal 1110 from an AAnF 1120, the above-described AAnF selection and search procedure may be performed. Herein, the AF 1140 may transmit a request to the AAnF 1120 through a network exposure function (NEF) 1130, and a request message may include an A-KID and an AF_ID. The NEF 1130 may perform a procedure of selecting the AAnF 1120 based on the request message and transmit a request message including the A-KID and the AF_ID to the selected AAnF 1120. Next, the NEF 1130 may receive a response message including an SUPI, a generated K_{AF}, and a K_{AF} expiration time and forward the response message to the AF 1130, and a subsequent operation may be as described above.

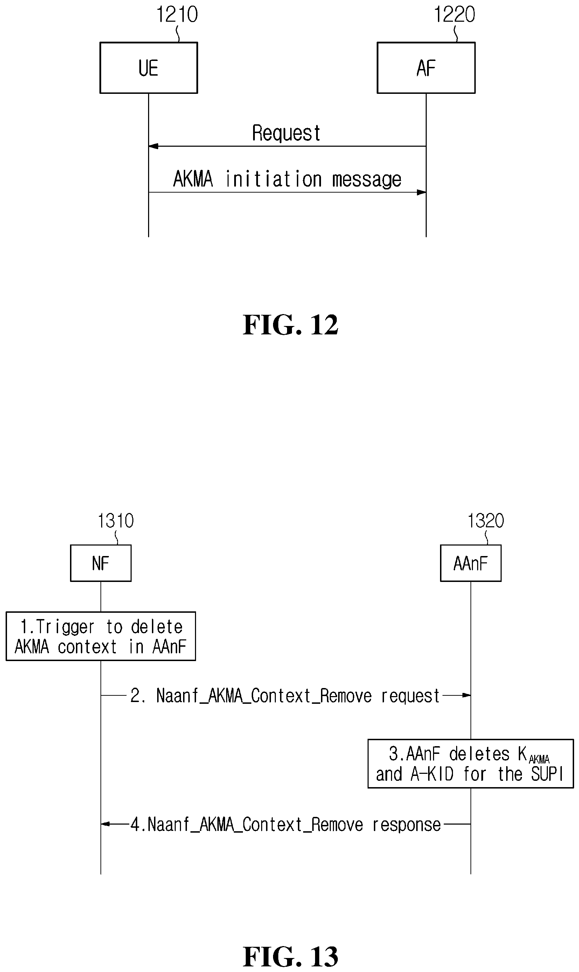

FIG. 12 is a view showing a method for initiating AKMA that is applicable to the present disclosure. Referring to FIG. 12, in case a terminal 1210 fails to perceive an AKMA service, the terminal 1210 may forward an AKMA-related request to an AF 1220. Herein, the AKMA-related request may include or not include AKMA-related parameters. Herein, in case the AF 1220 uses shared keys for AKMA but the request does not include AKMA-related parameters, the AF 1220 may forward an AKMA initial message to the terminal 1210, and thus the terminal 1210 may perceive the AKMA service and operate as described above.

FIG. 13 is a view showing a method for removing an AKMA context that is applicable to the present disclosure. Referring to FIG. 13, an NF 1310 may trigger removal of an AKMA context in an AANF 1320 based on a local policy. Herein, the NF 1310 may discover the AANF 1320 of a terminal and forward a removal request message (e.g., Naanf_AKMA_AKMA_Context_Remove request) to the AANF 1320. The AANF 1320 may receive the removal request message form the NF 1310 and remove a KAKMA and an A-KID based on an SUPI. Next, the AANF 1320 may forward a removal response message (e.g., Naanf_AKMA_Context_Remove response) to the NF 1310.

As described above, an AKMA may be a system that enables an application key to be generated as it is necessary when an application and a terminal perform encrypted communication. Specifically, it may be a system that enables an application key to be generated based on mutual authentication between a terminal and a mobile communication network and a network root key K_{AUSF} generated after the authentication is performed. Herein, as an example, the AKMA may provide in a home public land mobile network (HPLMN) as a home network, but in case a terminal accesses a visited PLMN (VPLMN) as a visited network, the AKMA may not be supported. However, if a terminal accesses a VPLMN and then uses an application server of an HPLMN, an AKMA service may be needed, which will be described below. Background technology, terms and abbreviations used in this specification may refer to what is described in standard documents published prior to this specification. For example, the following documents and abbreviations may be referenced.

Based on a network root key K_{AUSF} generated after a terminal succeeds in primary authentication based on an AKMA system, a network and the terminal may generate K_{AKMA} as a root key that may be used to generate an application key later. Herein, an A-KID capable of indicating K_{AKMA} may also be generated, which is the same as described above.

K_{AKMA} generated in an AUSF may be forwarded to an AAnF. In addition, a terminal may generate K_{AF} from K_{AKMA} in advance. Next, the terminal may send an application session generation request including an A-KID to an AF. The AF may verify the A-KID included in the application session generation request and check presence of a corresponding security context. As an example, in case there is no security context, the AF may request an AAnF to generate a new K_{AF}. The AAnF may generate the new K_{AF} based on K_{AKMA}, set an expiration time of the K_{AF} and then forward information on the K_{AF} and the expiration time of the K_{AF} to the AF.

However, the above-described operation may be applicated to a case in which both the terminal and the AF are present in a home network (HPLMN), and a method for supporting the operation also in a VPLMN may be needed. Specifically, for a terminal accessing a visited network (VPLMN) and requiring a roaming service, a method for providing the service based on an AKMA system may be needed. Hereinafter will be described an operation for an AKMA service in case a terminal accesses a VPLMN and requires a roaming service. As an example, when a terminal accesses a VPLMN and requires a roaming service, the terminal may register an AKMA key not only in an AAnF of an HPLMN but also in an AAnF of the VPLMN and thus utilize an AKMA service both in the HPLMN and the VPLMN, and a detailed method for this will be described below.

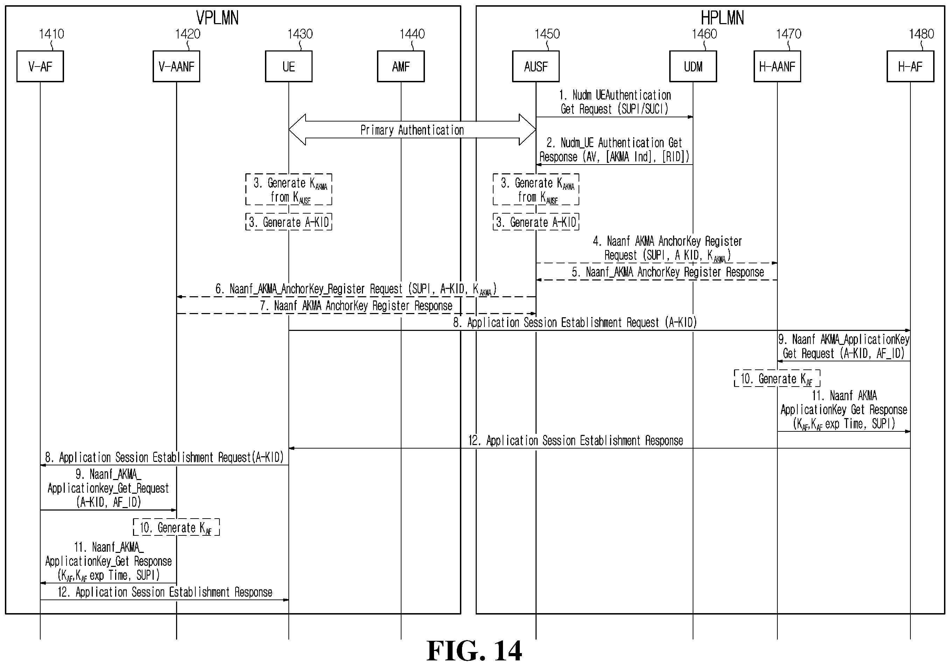

FIG. 14 is a view showing a method for registering an AKMA key in an AAnF of a VPLMN that is applicable to the present disclosure. Referring to FIG. 14, a terminal 1430 may access a VPLMN. Herein, also in the VPLMN, a V-AF 1410 and a V-AAnF 1420 may be configured as an AF and an AAnF respectively. In addition, an AMF 1440 may also be configured for the VPLMN. Herein, when the terminal and a network perform primary authentication, an AUSF 1450 of an HPLMN may request information and a method necessary for authentication to a UDM 1460, and a request message may include an SUCI or an SUPI, as described above. Next, when the UDM 1460 forwards a response to the AUSF 1450, the UDM 1460 may indicate whether the terminal should generate an AKMA anchor key. As an example, if the response of the UDM 1460 includes an AKMA Ind, the response may include a routing indicator (RID) for the terminal, and corresponding information may be forwarded to the AUSF 1450.

It is possible to consider a case in which the AUSF 1450 receives the AKMA Ind from the UDM 1460 as the terminal and the network succeed in the primary authentication. That is, it is possible to consider a case in which the terminal is instructed to generate an AKMA anchor key. The AUSF 1450 may store a K_{AUSF} based on the primary authentication and generate an AKMA anchor key K_{AKMA} and an A-KID. In addition, the terminal 1430 may also store the K_{AUSF} based on the primary authentication and generate AKMA anchor key K_{AKMA} and an A-KID. After the AKMA key is generated, the AUSF 1450 may search an AAnF and select an AAnF of an HPLMN (H-AAnF) 1470. Next, the AUSF 1450 may forward an AKMA anchor key register request message (e.g., Naanf_AKMA_AnchorKey_Register Request) to the H-AAnF 1470. The AKMA anchor key register request message may include an SUPI of the terminal as well as the generated A-KID and K_{AKMA}. That is, the AUSF 1450 may forward the A-KID and K_{AKMA} together with the SUPI of the terminal to the selected H-AAnF 1470. Next, the H-AAnF 1470 may forward a response message (e.g., Naanf_AKMA_AnchorKey_Register Response) to the AUSF 1450 and thus indicate completion of AKMA key registration.

Herein, as an example, the AUSF 1450 may determine whether a terminal is roaming, based on a message for triggering primary authentication (e.g., N1 message). The AUSF 1450 may determine whether the terminal is roaming, based on a serving network name that is received through the message. Specifically, as described in FIG. 10 above, the terminal may forward an N1 message including an SUCI or a 5G-GUTI to an SEAF, and the SEAF may forward an authentication request message including a serving network name as well as the SUCI or an SUPI to the AUSF 1450. Thus, the AUSF 1450 may perceive the serving network name of the terminal and determine whether the terminal is roaming.

As an example, in case the terminal accesses another serving network (that is, the terminal is roaming), the AUSF 1450 itself may select an AAnF of a VPLMN (V-AAnF) 1410 through an AAnF search and selection function. Next, the AUSF 1450 may forward an AKMA anchor key register request message (e.g., Naanf_AKMA_AnchorKey_Register Request) also to the selected V-AAnF 1410. The anchor key register request message may a generated A-KID and a generated K_{AKMA} as well as an SUPI of the terminal. That is, the AUSF 1450 may forward the A-KID and K_{AKMA} as well as the SUPI of the terminal to the selected V-AAnF 1410. Next, the V-AAnF 1410 may forward a response message (e.g., Naanf_AKMA_AnchorKey_Register Response) to the AUSF 1450 and thus indicate completion of AKMA key registration.

Next, in case an application service is needed to the terminal 1430, the terminal 1430 may request an application session establishment by forwarding the generated A-KID to an AF located in a VPLMN or an HPLMN where the service is needed. As an example, in case the AF does not have a security context related to the received A-KID, the AF may request a K_{AF} by forwarding an A-KID to an AAnF. Herein, an AF_ID of the terminal may be forwarded with the A-KID. As an example, the AF may transmit an AKMA application key request message (e.g., Naanf_AKMA_Application key_Get_Request) to the AAnF. Herein, the AKMA application key request message may include at least one of the A-KID and the AF_ID. If the AAnF is capable of providing a service to the AF, the AAnF may generate and forward a K_{AF}. On the other hand, if the AAnF is incapable of providing a service to the AF, the AAnF may stop the procedure. Specifically, the AAnF may verify whether an AKMA is available, based on presence of a K_{AKMA} related to the A-KID. Herein, in case there is a K_{AKMA} corresponding to the AAnF, the AAnF may generate a K_{AF} if there is no K_{AF} that is previously made. Next, the AAnF may forward an SUPI, the generated K_{AF} and a K_{AF} expiration time to the AF. Next, the AF may notify completion of an application session to the terminal 1430. When the application session is generated, the terminal and an application may perform communication through the session.

As an example, the terminal 1430 may transmit an application session establishment request to the AF 1410 of a VPLMN based on a Ua interface. The application session establishment request may include an A-KID. Herein, in case the V-AF 1410 does not have a security context related to the received A-KID, the V-AF 1410 may forward the A-KID to a V-AAnF 1420 to request a KAF. Herein, an AF_ID of the terminal may be forwarded with the A-KID. As an example, the V-AF 1410 may transmit an AKMA application key request message (e.g., Naanf_AKMA_Application key_Get_Request) to the V-AAnF 1420. Herein, the AKMA application key request message may include at least one of the A-KID and the AF_ID. In case the V-AAnF 1420 is capable of providing a service to the V-AF 1410, a K_{AF} may be generated and forwarded. On the other hand, in case the V-AAnF 1420 is incapable of providing the service to the V-AF 1410, a corresponding procedure may be stopped. Specifically, the V-AAnF 1420 may verify whether an AKMA is available, based on presence of a K_{AKMA} related to an A-KID. Herein, in case the V-AAnF 1420 has a corresponding K_{AKMA}, the V-AAnF 1420 may generate a K_{AF} if there is no K_{AF} that is previously made. Next, the V-AAnF 1420 may forward an SUPI, the generated K_{AF} and a K_{AF} expiration time to the V-AF 1410. Next, the V-AF 1410 may notify completion of an application session to the terminal 1430. When the application session is generated, the terminal and the application may perform communication through the session.

On the other hand, the terminal 1430 may transmit an application session establishment request to an AF 1480 of an HPLMN based on a Ua interface. The application session establishment request may include an A-KID. As an example, in case the H-AF 1480 does not have a security context related to the received A-KID, the H-AF 1480 may forward the A-KID to a H-AAnF 1470 to request a K_{AF}. Herein, an AF_ID of the terminal may be forwarded with the A-KID. As an example, the H-AF 1480 may transmit an AKMA application key request message (e.g., Naanf_AKMA_Application key_Get_Request) to the H-AAnF 1470. The AKMA application key request message may include at least one of the A-KID and the AF_ID. In case the H-AAnF 1470 is capable of providing a service to the H-AF 1480, a K_{AF} may be generated and forwarded. On the other hand, in case the H-AAnF 1470 is incapable of providing the service to the H-AF 1480, a corresponding procedure may be stopped. Specifically, the H-AAnF 1470 may verify whether an AKMA is available, based on presence of a K_{AKMA} related to an A-KID. Herein, in case the H-AAnF 1470 has a corresponding K_{AKMA}, the H-AAnF 1470 may generate a K_{AF} if there is no K_{AF} that is previously made. Next, the H-AAnF 1470 may forward an SUPI, the generated K_{AF} and a K_{AF} expiration time to the H-AF 1480. Next, the H-AF 1480 may notify completion of an application session to the terminal 1430. When the application session is generated, the terminal and the application may perform communication through the session.

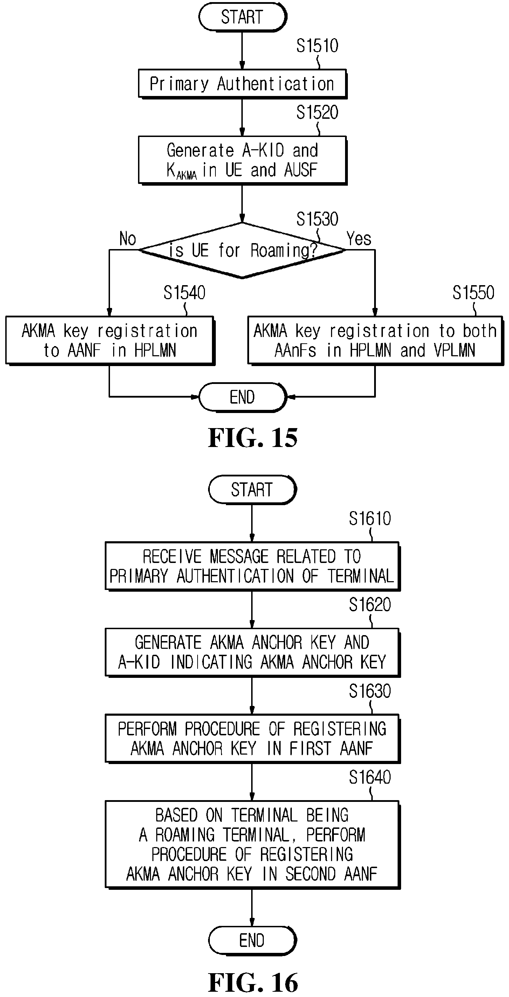

FIG. 15 is a view showing a method for registering an AKMA key that is applicable to the present disclosure. Referring to FIG. 15, a terminal may complete primary authentication (S1510). Next, an A-KID and a K_{AKMA} may be generated in each of the terminal and an AUSF (S1520). Herein, the AUSF may determine whether the terminal is roaming terminal, based on a serving network name that is received through an N1 message before the primary authentication is triggered (S1530). Herein, if the terminal is not a roaming terminal, the AUSF may perform a procedure of registering a key in an AAnF in an HPLMN (S1540). On the other hand, if the terminal is a roaming terminal, the AUSF may perform the procedure of registering a key in the AAnF in the HPLMN and also perform a procedure of registering a key in an AAnF in a VPLMN. As an example, a key registration procedure order to each network may be regardless. In the case of a roaming terminal, since a K_{AKMA} is registered in the AAnF of the VPLMN through the key registration procedure, when an application session request is performed to an AF in the VPLMN, a session may be generated. That is, the AUSF of the HPLMN may determine whether the terminal is roaming terminal and register an AKMA anchor key by performing a key registration procedure directly for the AAnF of the VPLMN.

FIG. 16 is a flowchart of a method for operating an AUSF that is applicable to the present disclosure.

Referring to FIG. 16, the AUSF may receive a message related to primary authentication of a terminal (S1610). Herein, the message related to the primary authentication may include a serving network name (SN-name) of the terminal together with a subscription concealed identifier (SUCI) or a 5G-globally unique temporary identifier (GUTI), and this is the same as described above. Next, the AUSF may generate an authentication and key management for applications (AKMA) anchor key and an A-KID indicating the AKMA anchor key based on a network root key (S1620). Next, the AUSF may perform a procedure of registering the AKMA anchor key in a first AKMA anchor function (AAnF) based on an SUPI, the AKMA anchor key and the A-KID (S1630). In addition, the AUSF may determine whether the terminal is a roaming terminal, and if the terminal is a roaming terminal, the AUSF may perform a procedure of registering the AKMA anchor key in a second AAnF (S1640).

Herein, if the terminal is a roaming terminal, the AUSF may be an AUSF of a home public land mobile network (HPLMN) of the terminal, a first AAnF may be an AAnF of the HPLMN, and a second AAnF may be an AAnF of a visited PLMN (VPLMN). Herein, irrespective of whether the terminal is roaming terminal, the AUSF may perform a procedure of registering the AKMA anchor key in the AAnF of the HPLMN based on the AKMA anchor key and the A-KID. As an example, when the AUSF performs the procedure of registering the AKMA anchor key in the AAnF of the HPLMN, the AUSF may transmit an AKMA anchor key registration request including a subscriber permanent identifier (SUPI), the AKMA anchor key and the A-KID to the AAnF of the HPLMN, and complete the registration of the AKMA anchor key in the AAnF of the HPLMN by receiving an AKMA anchor key registration response from the AAnF of the HPLMN.

In addition, as an example, the AUSF may determine whether the terminal is a roaming terminal, based on the serving network name. If the terminal is a roaming terminal, the AUSF may transmit an AKMA anchor key registration request including the SUPI, the AKMA anchor key and the A-KID to an AAnF of a VPLMN, and complete the registration of the AKMA anchor key in the AAnF of the VPLMN by receiving an AKMA anchor key registration response from the AAnF of the VPLMN.

In addition, as an example, in case a roaming terminal transmits an application session generation request to an application function (AF) of a VPLMN, an application key may be provided to the terminal based on an AAnF of the VPLMN. On the other hand, in case the roaming terminal transmits an application session generation request to an AF of a HPLMN, an application key may be provided to the terminal based on an AAnF of the HPLMN.

As another example, an application session request transmitted by a terminal may include an A-KID, and an AF may determine, based on the A-KID, whether the terminal is a roaming terminal. Herein, in case the terminal is determined as a roaming terminal, the AF may request an application key to an AAnF of a VPLMN, obtain an application key derived from an AKMA anchor key and application key expiration time information, and thus establish an application session with the terminal. On the other hand, in case the terminal is determined as not roaming terminal, the AF may request an application key to an AAnF of an HPLMN, obtain an application key derived from an AKMA anchor key and application key expiration time information, and thus establish an application session with the terminal.

As another example, based on a message related to primary authentication of a terminal, an AUSF may transmit a request message for the primary authentication of the terminal to a unified data management (UDM) and receive a response message for the primary authentication of the terminal. A response message for the primary authentication of the terminal may include an indicator indicating whether an AKMA is supported. Herein, if the AKMA is supported based on the indicator, an AKMA anchor key and an A-KID are generated based on a network root key, and the terminal may also generate an AKMA anchor key and an A-KID based on the network root key.

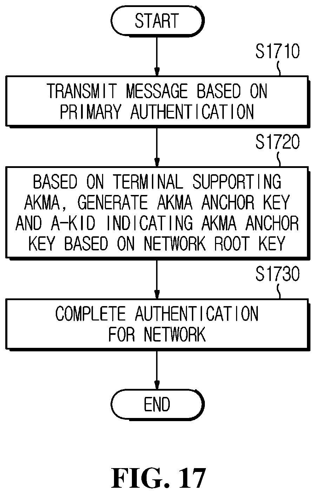

FIG. 17 is a flowchart of a method for operating a terminal that is applicable to the present disclosure.

Referring to FIG. 17, the terminal may transmit a message based on primary authentication (S1710). Herein, the message may include any one of a subscription concealed identifier (SUCI) or a 5G- globally unique temporary identifier (5G-GUTI). In case the terminal supports authentication and key management for applications (AKMA), the terminal may generate an AKMA anchor key and an A-KID indicating the AKMA anchor key based on a network root key (S1720). Next, the terminal may complete authentication for a network (S1730). Herein, in case the terminal is a roaming terminal, an AUSF may perform a procedure of registering the AKMA anchor key in a first AKMA anchor function (AAnF) and a second AAnF respectively based on the AKMA anchor key and the A-KID.

As an example, if the terminal is a roaming terminal, the AUSF may be an AUSF of a home public land mobile network (HPLMN) of the terminal, a first AAnF may be an AAnF of the HPLMN, and a second AAnF may be an AAnF of a visited PLMN (VPLMN). Herein, irrespective of whether the terminal is roaming, the AUSF may perform a procedure of registering the AKMA anchor key in the AAnF of the HPLMN based on the AKMA anchor key and the A-KID. As an example, when the AUSF performs the procedure of registering the AKMA anchor key in the AAnF of the HPLMN, the AUSF may transmit an AKMA anchor key registration request including a subscriber permanent identifier (SUPI), the AKMA anchor key and the A-KID to the AAnF of the HPLMN, receive an AKMA anchor key registration response from the AAnF of the HPLMN, and thus completely register the AKMA anchor key in the AAnF of the HPLMN

In addition, as an example, the AUSF may determine whether the terminal is a roaming terminal, based on the serving network name. If the terminal is a roaming terminal, the AUSF may transmit an AKMA anchor key registration request including the SUPI, the AKMA anchor key and the A-KID to an AAnF of a VPLMN, receive an AKMA anchor key registration response from the AAnF of the VPLMN, and thus completely register the AKMA anchor key in the AAnF of the VPLMN.

In addition, as an example, in case a roaming terminal transmits an application session generation request to an application function (AF) of a VPLMN, an application key may be provided to the terminal based on an AAnF of the VPLMN. On the other hand, in case the roaming terminal transmits an application session generation request to an AF of a HPLMN, an application key may be provided to the terminal based on an AAnF of the HPLMN.

As another example, an application session request transmitted by a terminal may include an A-KID, and an AF may determine, based on the A-KID, whether the terminal is a roaming terminal. Herein, in case the terminal is determined as a roaming terminal, the AF may request an application key to an AAnF of a VPLMN, obtain an application key derived from an AKMA anchor key and application key expiration time information, and thus establish an application session with the terminal. On the other hand, in case the terminal is determined as not roaming terminal, the AF may request an application key to an AAnF of an HPLMN, obtain an application key derived from an AKMA anchor key and application key expiration time information, and thus establish an application session with the terminal.

As another example, based on a message related to primary authentication of a terminal, an AUSF may transmit a request message for the primary authentication of the terminal to a unified data management (UDM) and receive a response message for the primary authentication of the terminal. A response message for the primary authentication of the terminal may include an indicator indicating whether an AKMA is supported. Herein, if the AKMA is supported based on the indicator, an AKMA anchor key and an A-KID are generated based on a network root key, and the terminal may also generate an AKMA anchor key and an A-KID based on the network root key.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for operating an authentication server function (AUSF) in a wireless communication system, the method comprising:
receiving a message related to a primary authentication of a terminal, wherein the message related to the primary authentication includes a serving network name (SN-name) of the terminal together with a subscription concealed identifier (SUCI) or a 5G-globally unique temporary identifier (GUTI);
generating an authentication and key management for applications (AKMA) anchor key and an A-KID indicating the AKMA anchor key based on a network root key;
performing a procedure of registering the AKMA anchor key in a first AKMA anchor function (AAnF) based on an SUPI, the AKMA anchor key and the A-KID;
determining whether the terminal is a roaming terminal; and
based on the terminal being the roaming terminal, performing a procedure of registering the AKMA anchor key in a second AAnF.

2. The method of claim 1, wherein based on the terminal being the roaming terminal, the AUSF is an AUSF of a home public land mobile network (HPLMN) of the terminal, the first AAnF is an AAnF of the HPLMN, and the second AAnF is an AAnF of a visited PLMN (VPLMN).

3. The method of claim 2, wherein irrespective of whether the terminal is a roaming terminal, the AUSF performs a procedure of registering the AKMA anchor key in the AAnF of the HPLMN based on the AKMA anchor key and the A-KID.

4. The method of claim 3, wherein based on the AUSF performing the procedure of registering the AKMA anchor key in the AAnF of the HPLMN, the AUSF transmits an AKMA anchor key registration request including a subscriber permanent identifier (SUPI), the AKMA anchor key and an A-KID to the AAnF of the HPLMN, and
wherein the AUSF completes the registration of the AKMA anchor key in the AAnF of the HPLMN by receiving an AKMA anchor key registration response from the AAnF of the HPLMN.

5. The method of claim 4, wherein the AUSF determines, based on the serving network name, whether the terminal is the roaming terminal,
wherein based on the terminal being the roaming terminal, the AUSF transmits an AKMA anchor key registration request including an SUPI, the SUPI, the AKMA anchor key and the A-KID to the AAnF of the VPLMN, and
wherein the AUSF completes registration of the AKMA anchor key in the AAnF of the VPLMN by receiving an AKMA anchor key registration response from the AAnF of the VPLMN.

6. The method of claim 5, wherein based on the roaming terminal transmitting an application session generation request to an application function (AF) of the VPLMN, an application key is provided to the terminal based on the AAnF of the VPLMN, and
wherein based on the roaming terminal transmitting an application session generation request to an AF of the HPLMN, an application key is provided to the terminal based on the AAnF of the HPLMN.

7. The method of claim 5, wherein the application session request transmitted by the terminal includes the A-KID, and an AF determines, based on the A-KID, whether the terminal is the roaming terminal.

8. The method of claim 7, wherein based on the terminal being determined as the roaming terminal, the AF requests the application key to the AAnF of the VPLMN, obtains the application key derived from the AKMA anchor key and application key expiration time information, and establishes an application session with the terminal.

9. The method of claim 7, wherein based on the terminal being determined as not roaming terminal, the AF requests the application key to the AAnF of the HPLMN, obtains the application key derived from the AKMA anchor key and application key expiration time information, and establishes an application session with the terminal.

10. The method of claim 1, wherein the AUSF transmits a request message for the primary authentication of the terminal to a unified data management (UDM) based on the message related to the primary authentication of the terminal,
wherein the AUSF receives a response message for the primary authentication of the terminal from the UDM,
wherein the response message for the primary authentication of the terminal includes an indicator indicating whether the AKMA is supported,
wherein based on the AKMA being supported based on the indicator, the AKMA anchor key and the A-KID are generated based on the network root key, and
wherein the terminal generates the AKMA anchor key and the A-KID based on the network rook key.

11. The method of claim 1, wherein the message related to the primary authentication of the terminal is an N1 message.

12. An authentication server function (AUSF) operating in a wireless communication system, the AUSF comprising:
at least one transceiver;
at least one processor; and
at least one memory operably coupled to the at least one processor and storing instructions that instruct, when executed, the at least one processor to perform a specific operation,
wherein the specific operation is configured to:
control the at least one transceiver to receive a message related to a primary authentication of a terminal, wherein the message related to the primary authentication includes a serving network name (SN-name) of the terminal together with a subscription concealed identifier (SUCI) or a 5G-globally unique temporary identifier (GUTI),
generate an authentication and key management for applications (AKMA) anchor key and an A-KID indicating the AKMA anchor key based on a network root key,
perform a procedure of registering the AKMA anchor key in a first AKMA anchor function (AAnF) based on an SUPI, the AKMA anchor key and the A-KID,
determine whether the terminal is a roaming terminal, and
based on the terminal being the roaming terminal, perform a procedure of registering the AKMA anchor key in a second AAnF.

13. A method for operating a terminal in a wireless communication system, the method comprising:
transmitting, by the terminal, a message based on primary authentication - wherein the message includes any one of a subscription concealed identifier (SUCI) or a 5G-globally unique temporary identifier (GUTI) -;
based on the terminal supporting authentication and key management for applications (AKMA), generating an AKMA anchor key and an A-KID indicating the AKMA anchor key based on a network root key; and
completing authentication for a network,
wherein based on the terminal being a roaming terminal, an AUSF performs a procedure of registering the AKMA anchor key in a first AKMA anchor function (AAnF) and a second AAnF respectively based on the AKMA anchor key and the A-KID.

14. A terminal operating in a wireless communication system, the terminal comprising:
at least one transceiver;
at least one processor; and
at least one memory operably coupled to the at least one processor and storing instructions that instruct, when executed, the at least one processor to perform a specific operation,
wherein the specific operation is configured to:
control the at least one transceiver to transmit a message based on primary authentication, wherein the message includes any one of a subscription concealed identifier (SUCI) or a 5G-globally unique temporary identifier (GUTI),
based on the terminal supporting authentication and key management for applications (AKMA), generate an AKMA anchor key and an A-KID indicating the AKMA anchor key based on a network root key, and
complete authentication for a network, and
wherein based on the terminal being a roaming terminal, an AUSF performs a procedure of registering the AKMA anchor key in a first AKMA anchor function (AAnF) and a second AAnF respectively based on the AKMA anchor key and the A-KID.

15. A device comprising at least one memory and at least one processor functionally coupled with the at least one memory,
wherein the at least one processor controls the device to:
receive a message related to a primary authentication of a terminal, wherein the message related to the primary authentication includes a serving network name (SN-name) of the terminal together with a subscription concealed identifier (SUCI) or a 5G-globally unique temporary identifier (GUTI),
generate an authentication and key management for applications (AKMA) anchor key and an A-KID indicating the AKMA anchor key based on a network root key,
perform a procedure of registering the AKMA anchor key in a first AKMA anchor function (AAnF) based on an SUPI, the AKMA anchor key and the A-KID,
determine whether the terminal is a roaming terminal, and
based on the terminal being the roaming terminal, perform a procedure of registering the AKMA anchor key in a second AAnF.

16. A non-transitory computer-readable medium storing at least one instruction, the non-transitory computer-readable medium comprising the at least one instruction that is executable by a processor,
wherein the at least one instruction controls a device to:
receive a message related to a primary authentication of a terminal, wherein the message related to the primary authentication includes a serving network name (SN-name) of the terminal together with a subscription concealed identifier (SUCI) or a 5G-globally unique temporary identifier (GUTI),
generate an authentication and key management for applications (AKMA) anchor key and an A-KID indicating the AKMA anchor key based on a network root key,
perform a procedure of registering the AKMA anchor key in a first AKMA anchor function (AAnF) based on an SUPI, the AKMA anchor key and the A-KID,
determine whether the terminal is a roaming terminal, and
based on the terminal being the roaming terminal, perform a procedure of registering the AKMA anchor key in a second AAnF.
